# EUROPEAN PATENT APPLICATION

(11) **EP 4 645 066 A1**
(43) Date of publication of application: **05.11.2025**
(21) Application number: 24783963.2
(22) Date of filing: 26.01.2024
(51) Int. Cl.: G06F 8/30, G06F 8/71

(54) **CODE SEARCH METHOD, DEVICE AND SYSTEM**

(30) Priority: 07.04.2023 CN 202310384330
(71) Applicant: Huawei Technologies Co., Ltd., Shenzhen, Guangdong 518129 (CN)
(72) Inventor: ZHENG, Dongdong, Shenzhen, Guangdong 518129 (CN); LIU, Yuan, Shenzhen, Guangdong 518129 (CN); ZHOU, Guangyu, Shenzhen, Guangdong 518129 (CN); ZHU, Yuda, Shenzhen, Guangdong 518129 (CN)
(74) Representative: Goddar, Heinz J.
(86) International application number: PCT/CN2024/074315
(87) International publication number: WO 2024/207878

(57) **Abstract**

This application relates to the field of computer technologies, and provides a code search method, a device, and a system, to support a cross-programming-language service and improve code reading efficiency. The method includes: A first device determines to search a file of a second programming language for code associated with a first function in a file of a first programming language. The first device sends a first request to a service device of the second programming language through a first protocol. The first device receives a first response from the service device of the second programming language through the first protocol. The file of the second programming language and the file of the first programming language are files of different programming languages. The first protocol is related to a language server protocol LSP. The first request includes a name of a first function and search information. The search information includes: searching the file of the second programming language for code associated with code in the file of the first programming language. The first response includes first information, and the first information indicates a location of the code associated with the first function.

## Description

This application claims priority to Chinese Patent Application No. 202310384330.4, filed with the China National Intellectual Property Administration on April 7, 2023 and entitled "CODE SEARCH METHOD, DEVICE, AND SYSTEM", which is incorporated herein by reference in its entirety.

### TECHNICAL FIELD

This application relates to the field of computer technologies, and in particular, to a code search method, a device, and a system.

### BACKGROUND

For a developer, reading code is one of jobs of the developer. In a development environment with a single programming language, most programming languages support code jumping, reference searching, and the like, and code can be quickly read. However, in a development environment with a plurality of programming languages, an integrated development environment (integrated development environment, IDE) cannot provide a cross-programming-language service, for example, does not support cross-programming-language code jumping or cross-programming-language reference searching. This greatly affects code reading efficiency of the developer.

### SUMMARY

This application provides a code search method, a device, and a system, to support a cross-programming-language service and improve code reading efficiency.

To achieve the foregoing objective, the following technical solutions are used in this application.

According to a first aspect, a code search method is provided, and is applied to a first device. The method may be performed by a first device, or may be performed by a component of a first device, for example, a processor, a chip, or a chip system of the first device, or may be implemented by a logical module or software capable of implementing all or some of functionalities of a first device. The method includes: The first device determines to search a file of a second programming language for code associated with a first function in a file of a first programming language. The first device sends a first request to a service device of the second programming language through a first protocol. The first device receives a first response from the service device of the second programming language through the first protocol. The file of the second programming language and the file of the first programming language are files of different programming languages. The first protocol is related to a language server protocol LSP. The first request includes a name of a first function and search information. The search information includes: searching the file of the second programming language for code associated with code in the file of the first programming language. The first response includes first information, and the first information indicates a location of the code associated with the first function.

According to the method provided in the first aspect, the first device interacts with the service device of the second programming language through the first protocol, sends the name of the first function and the search information to the service device of the second programming language, and receives the first information. The search information includes: searching the file of the second programming language for the code associated with the code in the file of the first programming language. The first information indicates the location of the code associated with the first function. In this way, a cross-programming-language service can be implemented, to improve code reading efficiency.

In a possible design, the first protocol includes a name field, a search field, and a location field. The name field carries the name of the first function, the search field carries the search information, and the location field carries the first information.

Optionally, the first protocol may be referred to as a cross-programming-language jump protocol or a cross-programming-language reference search protocol.

In a possible design, the determining to search a file of a second programming language for code associated with a first function in a file of a first programming language includes: determining to search the file of the second programming language for a function called by the first function. The first information includes a location of a second function, and the second function is a function that is in the file of the second programming language and that is called by the first function. For example, the first programming language is an eTS programming language, and the second programming language is a C++ programming language. In this way, cross-programming-language jumping can be implemented.

In a possible design, the determining to search a file of a second programming language for code associated with a first function in a file of a first programming language includes: determining to search the file of the second programming language for a function that references the first function. The first information includes a location of a third function, and the third function is a function that is in the file of the second programming language and that references the first function. For example, the first programming language is a C++ programming language, and the second programming language is an eTS programming language. In this way, cross-programming-language reference searching can be implemented.

In a possible design, the first information is determined based on the name of the first function, the search information, and a first mapping relationship, and the first mapping relationship includes a mapping relationship between at least one function in the file of the first programming language and at least one function in the file of the second programming language.

In a possible design, that the first device determines to search a file of a second programming language for code associated with a first function in a file of a first programming language includes: The first device detects a code search instruction, where the code search instruction instructs to search for the code associated with the first function. The first device sends first location information to a service device of the first programming language, where the first location information indicates a location of the first function in the file of the first programming language. The first device receives first indication information from the service device of the first programming language, where the first indication information indicates to search the file of the second programming language for the code associated with the first function in the file of the first programming language.

In a possible design, the first device includes a first-programming-language client plug-in and a second-programming-language client plug-in. That the first device detects a code search instruction includes: The first-programming-language client plug-in of the first device detects the code search instruction. Before the first device sends the first request to the service device of the second programming language through the first protocol, the method provided in the first aspect further includes: The first-programming-language client plug-in of the first device sends the name of the first function to the second-programming-language client plug-in of the first device.

In this way, different client plug-ins can interact with each other through a jump interface or a communication protocol between different programming languages, to support a cross-programming-language service.

According to a second aspect, a code search method is provided, and is applied to a service device of a second programming language. The method may be performed by the service device of the second programming language, or may be performed by a component of the service device of the second programming language, for example, a processor, a chip, or a chip system of the service device of the second programming language, or may be implemented by a logical module or software capable of implementing all or some of functionalities of the service device of the second programming language. The method includes: The service device of the second programming language receives a first request from a first device through a first protocol, and the service device of the second programming language sends a first response to the first device through the first protocol. The first protocol is related to a language server protocol LSP. The first request includes a name of a first function and search information. The search information includes: searching a file of the second programming language for code associated with code in a file of a first programming language. The first response includes first information, and the first information indicates a location of code associated with the first function.

In a possible design, the first protocol includes a name field, a search field, and a location field. The name field carries the name of the first function, the search field carries the search information, and the location field carries the first information.

In a possible design, the searching a file of the second programming language for code associated with code in a file of a first programming language is searching the file of the second programming language for a function called by the first function, the first information includes a location of a second function, and the second function is a function that is in the file of the second programming language and that is called by the first function.

In a possible design, the searching a file of the second programming language for code associated with code in a file of a first programming language is searching the file of the second programming language for a function that references the first function, the first information includes a location of a third function, and the third function is a function that is in the file of the second programming language and that references the first function.

In a possible design, the first information is determined based on the name of the first function, the search information, and a first mapping relationship, and the first mapping relationship includes a mapping relationship between at least one function in the file of the first programming language and at least one function in the file of the second programming language.

In addition, for technical effect of the method according to the second aspect, refer to the technical effect of the method according to any one of the possible implementations of the first aspect. Details are not described herein again.

According to a third aspect, a code search method is provided, and is applied to a service device of a first programming language. The method may be performed by the service device of the first programming language, or may be performed by a component of the service device of the first programming language, for example, a processor, a chip, or a chip system of the service device of the first programming language, or may be implemented by a logical module or software capable of implementing all or some of functionalities of the service device of the first programming language. The method includes: The service device of the first programming language receives first location information from a first device, and the service device of the first programming language sends first indication information to the first device. The first location information indicates a location of a first function in a file of the first programming language. The first indication information indicates to search a file of a second programming language for code associated with the first function in the file of the first programming language.

In addition, for technical effect of the method according to the third aspect, refer to the technical effect of the method according to any one of the possible implementations of the first aspect. Details are not described herein again.

According to a fourth aspect, a first device is provided. The first device includes a processing unit, a sending unit, and a receiving unit.

The processing unit is configured to determine to search a file of a second programming language for code associated with a first function in a file of a first programming language. The sending unit is configured to send a first request to a service device of the second programming language through a first protocol. The receiving unit is further configured to receive a first response from the service device of the second programming language through the first protocol. The file of the second programming language and the file of the first programming language are files of different programming languages. The first protocol is related to a language server protocol LSP. The first request includes a name of the first function and search information. The search information includes: searching the file of the second programming language for code associated with code in the file of the first programming language. The first response includes first information, and the first information indicates a location of the code associated with the first function.

In a possible design, the first protocol includes a name field, a search field, and a location field. The name field carries the name of the first function, the search field carries the search information, and the location field carries the first information.

Optionally, the first protocol may be referred to as a cross-programming-language jump protocol or a cross-programming-language reference search protocol.

In a possible design, the processing unit is further configured to determine to search the file of the second programming language for a function called by the first function. The first information includes a location of a second function, and the second function is a function that is in the file of the second programming language and that is called by the first function. For example, the first programming language is an eTS programming language, and the second programming language is a C++ programming language.

In a possible design, the processing unit is further configured to determine to search the file of the second programming language for a function that references the first function. The first information includes a location of a third function, and the third function is a function that is in the file of the second programming language and that references the first function. For example, the first programming language is a C++ programming language, and the second programming language is an eTS programming language. In a possible design, the first information is determined based on the name of the first function, the search information, and a first mapping relationship, and the first mapping relationship includes a mapping relationship between at least one function in the file of the first programming language and at least one function in the file of the second programming language.

In a possible design, the processing unit is further configured to detect a code search instruction, where the code search instruction instructs to search for the code associated with the first function. The sending unit is further configured to send first location information to a service device of the first programming language, where the first location information indicates a location of the first function in the file of the first programming language. The receiving unit is further configured to receive first indication information from the service device of the first programming language, where the first indication information indicates to search the file of the second programming language for the code associated with the first function in the file of the first programming language.

In a possible design, the processing unit includes a first-programming-language client plug-in and a second-programming-language client plug-in. The first-programming-language client plug-in of the first device is configured to detect the code search instruction. The first-programming-language client plug-in of the first device is further configured to send the name of the first function to the second-programming-language client plug-in of the first device.

It should be noted that the receiving unit and the sending unit may be integrated into one module, that is, a transceiver unit, or may be disposed separately. Specific implementations of the receiving unit and the sending unit are not specifically limited in this application.

Optionally, the first device according to the fourth aspect may further include a storage unit, and the storage unit stores a program or instructions. When the processing unit executes the program or the instructions, the first device according to the fourth aspect is enabled to perform the method according to the first aspect.

It should be noted that the first device according to the fourth aspect may be a computer or the like, or may be a chip (system) or another component or assembly that can be disposed in a computer or other devices. This is not limited in this application.

In addition, for technical effect of the first device according to the fourth aspect, refer to the technical effect of the method according to any one of the possible implementations of the first aspect. Details are not described herein again.

According to a fifth aspect, a second device is provided. The second device includes a sending unit and a receiving unit.

The receiving unit is configured to receive a first request from a first device through a first protocol. The sending unit is configured to send a first response to the first device through the first protocol. The first protocol is related to a language server protocol LSP. The first request includes a name of a first function and search information. The search information includes: searching a file of a second programming language for code associated with code in a file of a first programming language. The first response includes first information, and the first information indicates a location of code associated with the first function.

In a possible design, the first protocol includes a name field, a search field, and a location field. The name field carries the name of the first function, the search field carries the search information, and the location field carries the first information.

In a possible design, the searching a file of a second programming language for code associated with code in a file of a first programming language is searching the file of the second programming language for a function called by the first function, the first information includes a location of a second function, and the second function is a function that is in the file of the second programming language and that is called by the first function.

In a possible design, the searching a file of a second programming language for code associated with code in a file of a first programming language is searching the file of the second programming language for a function that references the first function, the first information includes a location of a third function, and the third function is a function that is in the file of the second programming language and that references the first function.

In a possible design, the first information is determined based on the name of the first function, the search information, and a first mapping relationship, and the first mapping relationship includes a mapping relationship between at least one function in the file of the first programming language and at least one function in the file of the second programming language.

It should be noted that the receiving unit and the sending unit may be integrated into one module, that is, a transceiver unit, or may be disposed separately. Specific implementations of the receiving unit and the sending unit are not specifically limited in this application.

Optionally, the second device according to the fifth aspect may further include a storage unit, and the storage unit stores a program or instructions. When a processing unit executes the program or the instructions, the second device according to the fifth aspect is enabled to perform the method according to the first aspect.

It should be noted that the second device according to the fifth aspect may be a server of the second programming language, a second server, or the like, or may be a chip (system) or another component or assembly that can be disposed in a server of the second programming language, a second server, or other devices. This is not limited in this application.

In addition, for technical effect of the second device according to the fifth aspect, refer to the technical effect of the method according to any one of the possible implementations of the first aspect. Details are not described herein again.

According to a sixth aspect, a server of a first programming language is provided. The server of the second programming language includes a sending unit and a receiving unit.

The receiving unit is configured to receive first location information from a first device. The sending unit is configured to send, for the server of the first programming language, first indication information to the first device. The first location information indicates a location of a first function in a file of the first programming language. The first indication information indicates to search a file of a second programming language for code associated with the first function in the file of the first programming language.

It should be noted that the receiving unit and the sending unit may be integrated into one module, that is, a transceiver unit, or may be disposed separately. Specific implementations of the receiving unit and the sending unit are not specifically limited in this application.

Optionally, the server of the first programming language according to the sixth aspect may further include a storage unit, and the storage unit stores a program or instructions. When a processing unit executes the program or the instructions, the server of the first programming language according to the sixth aspect is enabled to perform the method according to the first aspect.

It should be noted that the server of the first programming language according to the sixth aspect may be a first server or the like, or may be a chip (system) or another component or assembly that can be disposed in a first server or other devices. This is not limited in this application.

In addition, for technical effect of the server of the first programming language according to the sixth aspect, refer to the technical effect of the method according to any one of the possible implementations of the first aspect. Details are not described herein again.

According to a seventh aspect, a first device is provided. The first device includes one or more processors and one or more memories. The memory stores one or more programs. When the one or more programs is/are executed by the one or more processors, the first device is enabled to perform the method according to any one of the possible implementations of the first aspect. Optionally, the first device may further include a display.

According to an eighth aspect, a second device is provided. The second device includes one or more processors and one or more memories. The memory stores one or more programs. When the one or more programs is/are executed by the one or more processors, the second device is enabled to perform the method according to any one of the possible implementations of the first aspect.

According to a ninth aspect, a server of a first programming language is provided. The server of the first programming language includes one or more processors and one or more memories. The memory stores one or more programs. When the one or more programs is/are executed by the one or more processors, the server of the first programming language is enabled to perform the method according to any one of the possible implementations of the first aspect.

According to a tenth aspect, an embodiment of this application provides a circuit system. The circuit system includes a processing circuit. The processing circuit is configured to perform the method according to any one of the possible implementations of the first aspect.

According to an eleventh aspect, a communication system is provided. The communication system includes the first device according to the first aspect and the first device according to the second aspect, and may further include the server of the first programming language according to the third aspect. Alternatively, the communication system includes the first device according to the fourth aspect for implementing the method according to the first aspect, and the second device according to the fifth aspect for implementing the method according to the second aspect, and may further include the server of the first programming language according to the sixth aspect for implementing the method according to the third aspect.

According to a twelfth aspect, a readable storage medium is provided. The readable storage medium includes a program. When the program is run on a device, the device is enabled to perform the method according to any one of the possible implementations of the first aspect to the third aspect.

According to a thirteenth aspect, a chip system is provided. The chip system includes a processor and a memory. The memory stores a program. When the program is executed by the processor, the processor is enabled to implement the method according to any one of the possible implementations of the first aspect to the third aspect. The chip system may include a chip, or may include a chip and another discrete component.

According to a fourteenth aspect, a program product is provided. When the program product is run on a computer or a device, the computer or the device is enabled to implement the method according to any one of the possible implementations of the first aspect to the third aspect.

### BRIEF DESCRIPTION OF DRAWINGS

FIG. 1A is a diagram of a scenario according to an embodiment of this application;
FIG. 1B is a diagram of a scenario according to an embodiment of this application;
FIG. 1C is a diagram of a scenario according to an embodiment of this application;
FIG. 1D is a diagram of a scenario according to an embodiment of this application;
FIG. 1E is a diagram of a communication system according to an embodiment of this application;
FIG. 2 is a diagram of hardware structures of a first device and a second device according to an embodiment of this application;
FIG. 3 is a diagram of software structures of a first device and a second device according to an embodiment of this application;
FIG. 4 is a schematic flowchart of a code search method according to an embodiment of this application;
FIG. 5 to FIG. 6B are diagrams of some scenarios according to an embodiment of this application;
FIG. 7 is a schematic flowchart of another code search method according to an embodiment of this application;
FIG. 8 is a diagram of a scenario according to an embodiment of this application;
FIG. 9 is a schematic flowchart of still another code search method according to an embodiment of this application; and
FIG. 10 is a diagram of a structure of a device according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are merely intended to describe specific embodiments, but not to limit this application. The terms "an", "a", "the", "the foregoing", and "this" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner. The term "connection" includes direct connection and indirect connection, unless otherwise specified. "First" and "second" are merely intended for a purpose of description, and shall not be understood as an indication or implication of relative importance or an implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner.

In some embodiments, a development language of an IDE or an editor may be used to implement a front-end functionality (a scanner, an analyzer, a type check, or the like) of a language compiler, and provide a language service capability. Specifically, a cross-language service functionality may be implemented on an IDE platform based on a mapping relationship between functions of different programming languages.

For example, an Android Studio editor may implement, on an Intellij platform, a language service functionality between Java and C++ based on a mapping relationship between Java and C++ and a plug-in of the Intellij platform through a program structure interface (program structure interface, PSI) provided by the Intellij platform. The PSI is mainly responsible for parsing a file, creating syntax and semantic code, and the like.

For example, the mapping relationship between Java and C++ includes a correspondence between at least one Java function and at least one C++ function. For example, a Java function is defined in a format of a package name+a class name+a function name, and a corresponding C++ function is defined in a format of Java_a package name_a class name_a function name. The package name, the class name, and the function name in the C++ function are respectively the package name of the Java function, the class name of the Java function, and the function name of the Java function.

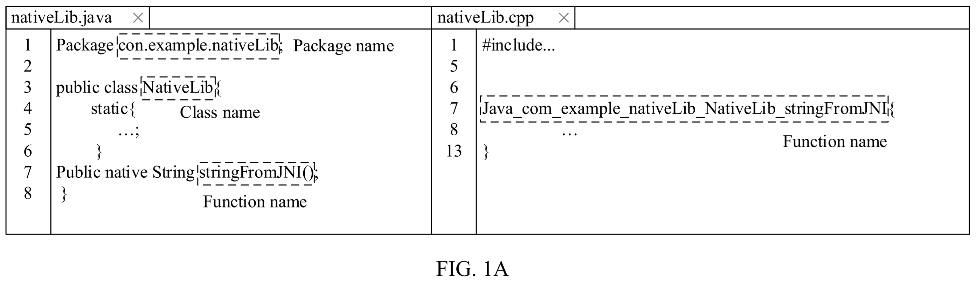

As shown in FIG. 1A, in a Java programming language, a package name of a stringFromJNI() function is com_example_nativeLib, and a class name of the stringFromJNI() function is NativeLib. In a C++ programming language, a C++ function corresponding to the Java function stringFromJNI() is Java_com_example_nativeLib_NativeLib_stringFromJNI(), as shown in a line 7 in a nativeLib.cpp file in FIG. 1A. A file of the C++ programming language includes a correspondence between a Java function and a C++ function. For example, the C++ function Java_com_example_nativeLib_NativeLib_stringFromJNI() may indicate a Java function corresponding to the C++ function.

The cross-language service functionality between Java and C++ that is implemented by the Android Studio editor needs to be strongly bound to the Intellij platform, and is implemented by the plug-in of the Intellij platform. If a non-Intellij editor, for example, a VSCode editor, is used, re-adaptation needs to be performed, leading to high switching costs and lack of universality.

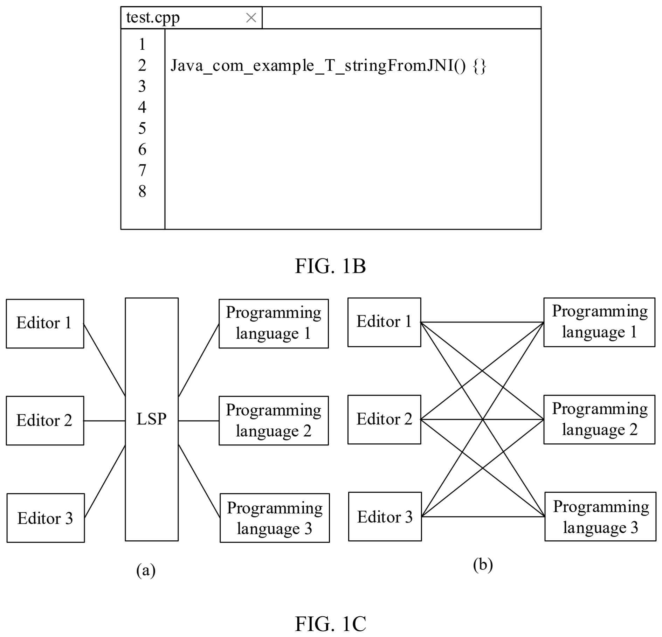

In addition, errors may be generated for some function names when the language service functionality between Java and C++ is implemented based on the foregoing mapping relationship. As shown in FIG. 1B, a Java_com_example_T_stringFromJNI() function in a C++ file is recognized as a method that has a corresponding Java function. Because the class name T is not defined in a Java file, an error is generated for the Java_com_example_T_stringFromJNI() function in the C++ file: This JNI function call may be using an incorrect linkage (This JNI function call may be using an incorrect linkage).

In some embodiments, all mainstream IDEs (such as VSCode, Vim, and Eclipse) construct language service capabilities based on a language server protocol (language server protocol, LSP). The LSP has quite strong universality. In a development environment with a single programming language, an IDE may implement a language service functionality based on the LSP. However, in a development environment with a plurality of programming languages, the LSP cannot support a cross-programming-language service.

For example, the LSP defines a protocol used between an editor or an IDE and a language server. The language server is configured to provide language functionalities such as autocomplete, go to definition, and find all references. As shown in (a) in FIG. 1C, in an LSP declaration, if there are m editors and each editor supports n programming languages, when both the editor and the programming language support the LSP, development needs to be performed only m+n times. A language service capability is provided by a language server, and can be reused by servers on different IDEs and is universal. However, no cross-programming-language service is supported. As shown in (b) in FIG. 1C, in a non-LSP (NO LSP) scenario, a front-end functionality of a language compiler is implemented by using a development language of an IDE or an editor, and a language service capability is provided by a plug-in. On different IDEs, a functionality needs to be re-implemented. If there are m editors and each editor supports n programming languages, development needs to be performed m×n times.

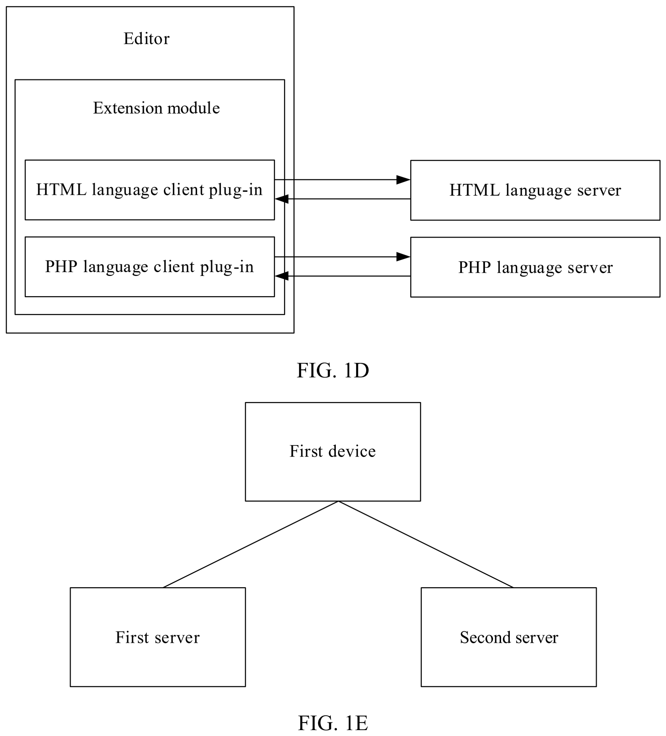

In the modes shown in (a) and (b) in FIG. 1C, an IDE can implement only a service functionality of a single programming language based on the LSP, and does not support a cross-programming-language service. Different programming languages do not communicate with each other. As shown in FIG. 1D, no cross-programming-language service is supported.

For example, FIG. 1E is a diagram of a communication system to which a code search method provided in embodiments of this application is applied.

The code search method provided in embodiments of this application is applied to the communication system. The communication system includes a first device and at least two second devices, for example, a first server and a second server, as shown in FIG. 1E.

The first device may be a computer, a tablet computer, a notebook computer, a host, or a product in another form. This is not specifically limited. The second device may be a server of a programming language. For example, the first server is a server of a first programming language, and the second server is a server of a second programming language. The first programming language is different from the second programming language. Specific forms of the first device and the second device are not specifically limited in embodiments of this application. Operating systems installed on the first device and the second device include but are not limited to iOS^{®}, Android^{®}, Harmony^{®}, Windows^{®}, Linux^{®}, or another operating system. Specific types of the first device and the second device, and operating systems installed on the first device and the second device are not limited in this application.

Optionally, the first device and the second device may establish a wired connection, or establish a wireless communication connection through a local area network. Optionally, the first device and the second device may alternatively establish a communication connection through a third-party device in a local area network. The third-party device is, for example, a router, a gateway, or a wireless access point (access point, AP) device.

Optionally, the first device and the at least two second devices in the communication system may be deployed in one device, or some devices are deployed in one device. For example, the first device, the first server, and the second server may be deployed in one device, or any two of the first device, the first server, and the second server may be deployed in one device.

It should be noted that the method provided in embodiments of this application is applicable to the communication system or the network architecture shown in FIG. 1E. For a specific implementation, refer to the following method embodiments. Details are not described herein.

It should be understood that FIG. 1E is merely a simplified diagram of an example for ease of understanding. The communication system or the network architecture may further include another network device not shown in FIG. 1E.

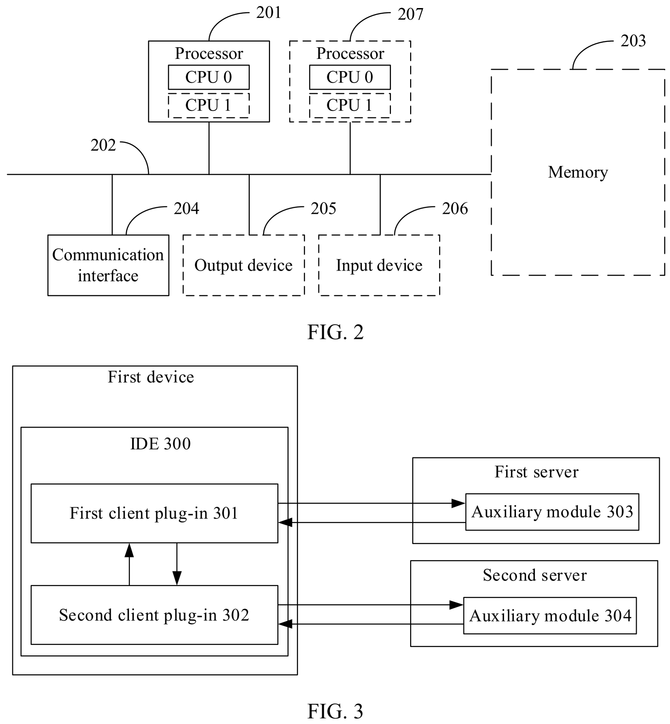

For example, FIG. 2 is a diagram of hardware structures of a first device and a second device according to an embodiment of this application.

The first device includes one or more processors 201. Optionally, the first device may further include a communication line 202, at least one communication interface (in FIG. 2, only an example in which a communication interface 204 and one processor 201 are included is used for description), and/or a memory 203.

The second device includes one or more processors 201. Optionally, the second device may further include a communication line 202, at least one communication interface (in FIG. 2, only an example in which a communication interface 204 and one processor 201 are included is used for description), and/or a memory 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions of this application.

The communication line 202 may include a path for connecting different components.

The communication interface 204 may be a transceiver module for communicating with another device or a communication network, for example, performing wireless communication with Ethernet, a wireless local area network (wireless local area network, WLAN) (for example, a wireless fidelity (wireless fidelity, Wi-Fi) network), or an RDMA network. For example, the transceiver module may be an apparatus like a transceiver or a transceiver device. Optionally, the communication interface 204 may alternatively be a transceiver circuit located in the processor 201, to implement signal input and signal output of the processor.

The memory 203 may be an apparatus with a storage functionality. For example, the memory 203 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, and the like), a magnetic disk storage medium or another magnetic storage device, or any other medium capable of carrying or storing expected program code in a form of instructions or data structures and capable of being accessed by a computer, but is not limited thereto. The memory may exist independently, and is connected to the processor through the communication line 202. The memory may alternatively be integrated with the processor.

The memory 203 is configured to store computer-executable instructions for performing the solutions of this application, and the processor 201 controls execution of the computer-executable instructions. The processor 201 is configured to execute the computer-executable instructions stored in the memory 203, to implement the method provided in embodiments of this application.

Alternatively, in embodiments of this application, the processor 201 may implement a processing-related functionality in a method provided in the following embodiments of this application, and the communication interface 204 is responsible for communicating with another device or a communication network. This is not specifically limited in this embodiment of this application.

Optionally, the memory 203 in this embodiment of this application may be further configured to store information or parameters described in the following embodiments.

The computer-executable instructions in this embodiment of this application may also be referred to as application program code. This is not specifically limited in this embodiment of this application.

During specific implementation, in an embodiment, the processor 201 may include one or more CPUs, for example, a CPU 0 and a CPU 1 in FIG. 2.

During specific implementation, in an embodiment, a coordinator node and a data node may include a plurality of processors, for example, a processor 201 and a processor 207 in FIG. 2. Each of the processors may be a single-core (single-CPU) processor or a multi-core (multi-CPU) processor. The processor herein may be one or more devices, circuits, and/or processing cores for processing data (for example, computer program instructions).

During specific implementation, in an embodiment, the coordinator node and the data node may further include an output device 205 and an input device 206. The output device 205 communicates with the processor 201, and may display information in a plurality of manners.

It can be understood that the structure shown in this embodiment of this application does not constitute a specific limitation on structures or forms of the coordinator node and the data node, and the structures or the forms of the coordinator node and the data node are not limited in this embodiment of this application.

In some other embodiments of this application, the coordinator node and the data node may include more or fewer components than those shown in the figure, or some components may be combined, or some components may be split, or different component layouts may be used. The components shown in the figure may be implemented by hardware, software, or a combination of software and hardware.

In addition, an interface connection relationship between the modules shown in FIG. 2 is merely an example for description, and does not constitute a limitation on structures of the coordinator node and the data node. In some other embodiments of this application, the coordinator node and the data node may alternatively use an interface connection mode different from that in FIG. 2, or use a combination of a plurality of interface connection modes.

For example, software architectures of the first device and the second device may be hierarchical architectures, event-driven architectures, microkernel architectures, microservice architectures, or cloud architectures. FIG. 3 is a diagram of software structures of a first device and a second device according to an embodiment of this application. In an example in FIG. 3, a communication system includes two second devices, for example, a first server and a second server.

The solutions provided in this application may be applied to an IDE 300 shown in FIG. 3. The IDE 300 may be deployed on the first device shown in FIG. 1E. The IDE 300 shown in FIG. 3 includes but is not limited to one or more of the following software modules: a first client plug-in 301 and a second client plug-in 302. The first server includes but is not limited to an auxiliary module 303. The first server includes but is not limited to an auxiliary module 304.

For example, the IDE 300 is configured to provide tools such as a code editor, a compiler, a debugger, and a graphical user interface.

For example, the first client plug-in 301 is a client of a first programming language, and is configured to communicate with the first server based on an LSP extension protocol, and interact with the second client plug-in 302 based on the LSP extension protocol.

For example, the second client plug-in 302 is a client of a second programming language, and is configured to communicate with the second server based on the LSP extension protocol, and interact with the first client plug-in 301 based on the LSP extension protocol.

Optionally, the IDE 300 may include three or more client plug-ins. In FIG. 3, two client plug-ins are shown as an example. The three or more client plug-ins may interact with each other, for example, based on the LSP extension protocol.

Optionally, the first client plug-in 301 and the second client plug-in 302 may be deployed in an extension module, and the IDE 300 includes the extension module, for example, an extension module (extension host), configured to provide a plug-in running environment.

For example, the first server is a server of the first programming language, and the auxiliary module 303 in the first server is configured to communicate with the first client plug-in 301 based on the LSP extension protocol.

For example, the second server is a server of the second programming language, and the auxiliary module 304 in the second server is configured to communicate with the second client plug-in 302 based on the LSP extension protocol.

For example, the LSP extension protocol may be a cross-programming-language jump protocol or a cross-programming-language reference search protocol.

It can be understood that the software modules included in the first device, the first server, and the second server shown in FIG. 3 are merely a possible division manner, and more or fewer modules may alternatively be included, or there may be another division manner. This is not limited in this application.

All technical solutions in the following embodiments may be implemented in an apparatus with the structure shown in FIG. 2 and/or the structure shown in FIG. 3.

It can be understood that, in embodiments of this application, the first device or the second device may perform some or all of steps in embodiments of this application. These steps or operations are merely examples. In embodiments of this application, other operations or variations of various operations may alternatively be performed. In addition, the steps may be performed in a sequence different from a sequence presented in embodiments of this application, and not all of the operations in embodiments of this application may be performed.

The following describes the method provided in embodiments of this application by using an example in which a communication system includes one first device and two second devices (for example, a first server and a second server).

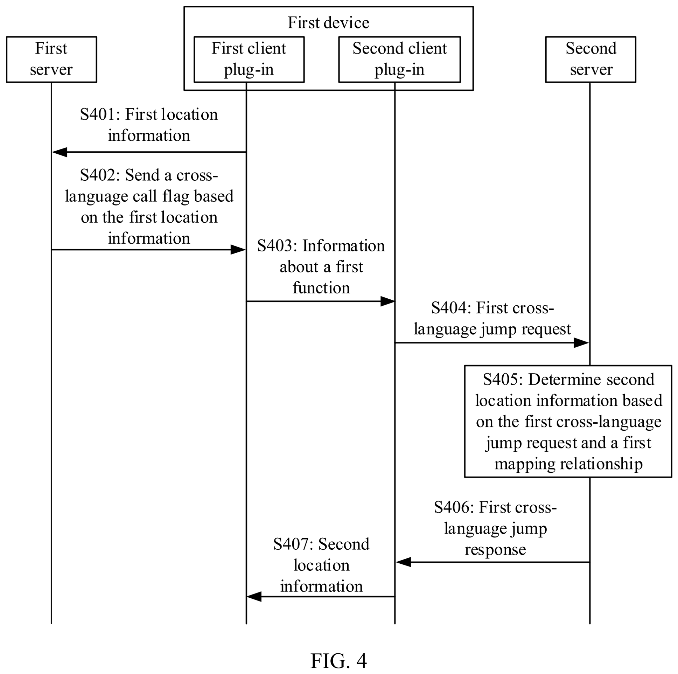

The following describes in detail the code search method provided in embodiments of this application with reference to FIG. 4 to FIG. 8.

For example, FIG. 4 is a schematic flowchart of a code search method according to an embodiment of this application. In the method shown in FIG. 4, code jumping between different programming languages is described. The method provided in this application is applicable to code jumping between two or more programming languages. The method shown in FIG. 4 is described by using code jumping between two programming languages as an example.

In FIG. 4, a first client plug-in is a client plug-in of a first programming language, a first server is a server of the first programming language, a second client plug-in is a client plug-in of a second programming language, and a second server is a server of the second programming language. In this application, a language is a programming language. In the method shown in FIG. 4, a process of the method provided in this application is described by using cross-language jumping between the first programming language and the second programming language as an example. For example, a user wants to view an underlying implementation of a first function in a file of the first programming language, and the underlying implementation of the first function is in a file of the second programming language.

As shown in FIG. 4, the method includes the following steps.

S401: The first client plug-in of a first device sends first location information to the first server.

For example, the first location information indicates a location of the first function in the file of the first programming language. For example, location information of the first function includes but is not limited to one or more of the following: a package name of the first function, a class name of the first function, a module name of the first function, a line at which the first function is located, and/or the like.

In this application, the package name of the first function is a name of a package to which the first function belongs, the class name of the first function is a name of a class to which the first function belongs, and the module name of the first function is a name of a module to which the first function belongs.

Optionally, S401 includes: After the first device detects a first operation, the first client plug-in of the first device sends the first location information to the first server.

For example, the first operation may be a jump operation performed by the user based on the first function.

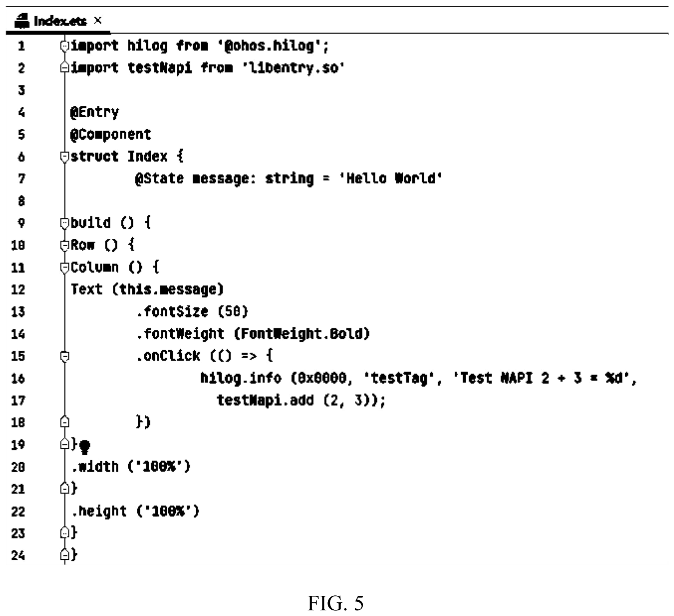

It is assumed that the first programming language is an eTS programming language, and the second programming language is a C++ programming language. In FIG. 5, cross-language code jumping between eTS and C++ in a DevEco Studio editor is used as an example. With reference to FIG. 5, it is assumed that the first function is a testNapi.add() function. If the user wants to search for a corresponding function in a C++ file based on the testNapi.add() function in an eTS file, the first operation may be an operation of clicking, by the user, Go To (Go To) on a right-click menu of the testNapi.add() function and then clicking Implementation (Implementation). Alternatively, the first operation may be a jump operation performed by the user on the testNapi.add() function by using a shortcut key.

With reference to FIG. 5, after detecting the first operation, the first device sends location information, for example, a line 17, of the testNapi.add() function to the first server.

S402: The first server sends a cross-language call flag to the first client plug-in of the first device based on the first location information.

Optionally, S402 may include: The first server determines, based on the first location information, whether the first function is a cross-programming-language calling function, and if the first function is a cross-programming-language calling function, sends the cross-language call flag to the first client plug-in of the first device.

For example, that the first function is a cross-programming-language calling function means that the first function in the file of the first programming language calls a function in a file of another programming language, or source code of the first function is in the file of the second programming language.

For example, the first server obtains, based on the first location information, the package name of the first function, and determines, based on a package name constraint, whether the first function is a cross-programming-language calling function. Optionally, if the location information of the first function is the line at which the first function is located, the first server may determine the package name of the first function based on the line at which the first function is located.

With reference to FIG. 5, the first server learns, based on the location information of the testNapi.add() function, that a package name of the testNapi.add() function is libentry; and determines, based on a package name constraint .so, that source code of testNapi.add() used in the eTS programming language is in a file of the C++ programming language. In this case, it is determined that testNapi.add(2, 3) is a cross-programming-language calling function. This is merely an example.

Alternatively, optionally, the first server may determine, based on a configuration file of the package to which the first function belongs, whether the first function is a cross-programming-language calling function, where the configuration file includes a type of the package.

S403: The first client plug-in of the first device sends information about the first function to the second client plug-in of the first device.

For example, the information about the first function includes one or more of the following: a function name of the first function, the class name of the first function, the module name of the first function, and the package name of the first function. For different programming languages, the information about the first function may include different content.

Optionally, S403 may include: The first client plug-in of the first device sends the information about the first function to the second client plug-in of the first device through a jump interface or a communication protocol (for example, a protocol obtained based on an LSP) between different programming languages. The jump interface is used for interaction between the first client plug-in of the first device and the second client plug-in of the first device. In this way, different client plug-ins can interact with each other through a jump interface or a communication protocol between different programming languages, to support a cross-programming-language service.

S404: The second client plug-in of the first device sends a first cross-language jump request to the second server.

For example, the first cross-language jump request is used to request a function called by the first function.

For example, the first cross-language jump request includes a name of the first function and information about a cross-language jump strategy, and may further include one or more of the following: the class name of the first function, the module name of the first function, and the package name of the first function.

For example, the information about the cross-language jump strategy may include an identifier of the cross-language jump strategy, and the cross-language jump strategy includes but is not limited to: jumping from the first programming language to the second programming language, jumping from the first programming language to a third programming language, and the like, for example, jumping from the eTS programming language to the C++ programming language, or jumping from the eTS programming language to a Java programming language. The second server may determine a corresponding jump scheme based on the information about the cross-language jump strategy.

In some embodiments, S404 may include: The second client plug-in of the first device sends the first cross-language jump request to the second server through a cross-programming-language jump protocol. A name of the cross-programming-language jump protocol is not limited in this application.

In this way, a client plug-in of a programming language can communicate with a server of the programming language through a cross-programming-language jump protocol. The cross-programming-language jump protocol is obtained by extending the LSP, and can implement a universal cross-language service capability, to resolve a problem of strong binding to a platform.

S405: The second server determines second location information based on the first cross-language jump request and a first mapping relationship.

For example, the second location information indicates a location of a second function in the file of the second programming language. The second function is a function that is in the file of the second programming language and that corresponds to the first function. The first function in the file of the first programming language calls the second function in the file of the second programming language.

For example, location information of the second function includes but is not limited to one or more of the following: a package name of the second function, a class name of the second function, a module name of the second function, a line at which the second function is located, and/or the like.

Optionally, the first mapping relationship includes a correspondence between at least one function of the first programming language and at least one function of the second programming language.

For example, the first mapping relationship includes a correspondence between an add function in a file of the eTS programming language and an Add function in the file of the C++ programming language. The first mapping relationship provided in this application does not cause a function name error.

For example, it is assumed that the cross-language jump strategy is jumping from the eTS programming language to the C++ programming language. The second server obtains the first mapping relationship from the file of the C++ programming language based on the information about the cross-language jump strategy, determines the second function based on the name of the first function and the first mapping relationship, and determines the location of the second function in the file of the second programming language. Optionally, in a process of determining the second location information, the second server may further take the class name of the first function, the module name of the first function, the package name of the first function, and/or the like into consideration.

S406: The second server sends a first cross-language jump response to the second client plug-in of the first device.

For example, the first cross-language jump response includes null or the second location information.

For example, the second server may find no second function corresponding to the first function and determine no second location information, and therefore returns null.

Optionally, the first cross-language jump response may alternatively include an error code and error information, and the error information may indicate a cause of error. For example, the second server does not support jumping from the first programming language to the second programming language and determines no second location information, and therefore returns the error code and the error information.

In some embodiments, S406 may include: The second server sends the first cross-language jump response to the second client plug-in of the first device through the cross-programming-language jump protocol.

With reference to S404 and S406, for example, the cross-programming-language jump protocol includes a request part and a response part. The request part may be expressed as textDocument/crossJumpDefinition(CrossLanguageJumpParams), where CrossLanguageJumpParams indicates a cross-language jump parameter, and textDocument/crossJumpDefinition indicates the name of the cross-programming-language jump protocol. The response part includes result information, and may further include other information. The result information may be expressed as null | Location | Location[], where null indicates an empty value, | indicates or, Location indicates one piece of second location information, and Location[] indicates a plurality of pieces of second location information. The other information includes the error code and the error information.

Optionally, the cross-language jump parameter in the request part may include one or more of the following: a name field, a strategy field, and an extension field. The following describes the fields in the cross-language jump parameter with reference to Table 1.

For example, the name field indicates the name of the first function.

For example, the strategy field indicates the cross-language jump strategy. For example, the strategy field includes the information about the cross-language jump strategy, for example, the identifier of the cross-language jump strategy.

For example, the extension field may also be referred to as a reserved field. For example, the extension field may be an extension field for the cross-language jump strategy. The extension field may be used to add an independent parameter needed for each cross-language jump strategy. Different parameters may be needed for different cross-language jump strategies, and content included in the extension field may be adjusted based on an actual cross-language jump strategy. Optionally, the class name of the first function, the module name of the first function, and/or the package name of the first function may be carried in the extension field of the cross-programming-language jump protocol.

**Table 1**

| Parameter | Field | Type | Remarks |
|---|---|---|---|
| Cross-language jump parameter (CrossLanguageJumpParams) | Name (name) | String (string) | The name field indicates a name, clicked by using a cursor, of a source-language function for cross-language jumping, for example, the function name of the first function. |
| | Strategy (strategy) | Cross string (CrossStrategy) | The strategy field indicates the cross-language jump strategy. |
| | Extension (extension) | Object (object) | The extension field may be an extension field for the cross-language jump strategy. |

Optionally, a location parameter (Location or Location[]) in the response part may include one or more of the following: a uniform resource identifier (uniform resource identifier, URI) field and a range field. The following describes the fields in the location parameter with reference to Table 2.

For example, the URI field indicates a URI of the file, to which the second function (which may also be referred to as a target-language function) belongs, of the second programming language, and may further indicate a storage path of the file of the second programming language in an external memory of a computer.

For example, the range field indicates a range of a function name of the second function.

**Table 2**

| Parameter | Field | Type | Remarks |
|---|---|---|---|
| Location (Location) | Uniform resource identifier (URI) | File URI (DocumentUri) | A URI of a file, to which the target-language function belongs, of a programming language |
| | Range (Range) | Range (Range) | A range of a name of the target-language function |

For example, the name of the cross-programming-language jump protocol is expressed as textDocument/crossJumpDefinition. With reference to the descriptions of the cross-programming-language jump protocol in Table 1 and Table 2, the cross-programming-language jump protocol obtained based on the LSP may be shown as follows:

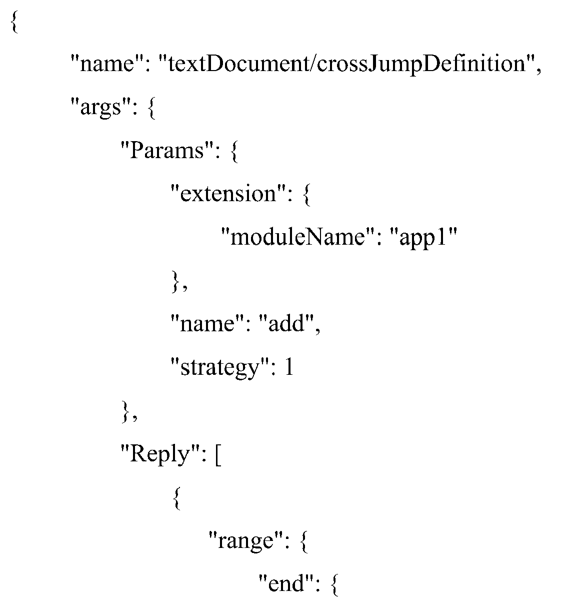

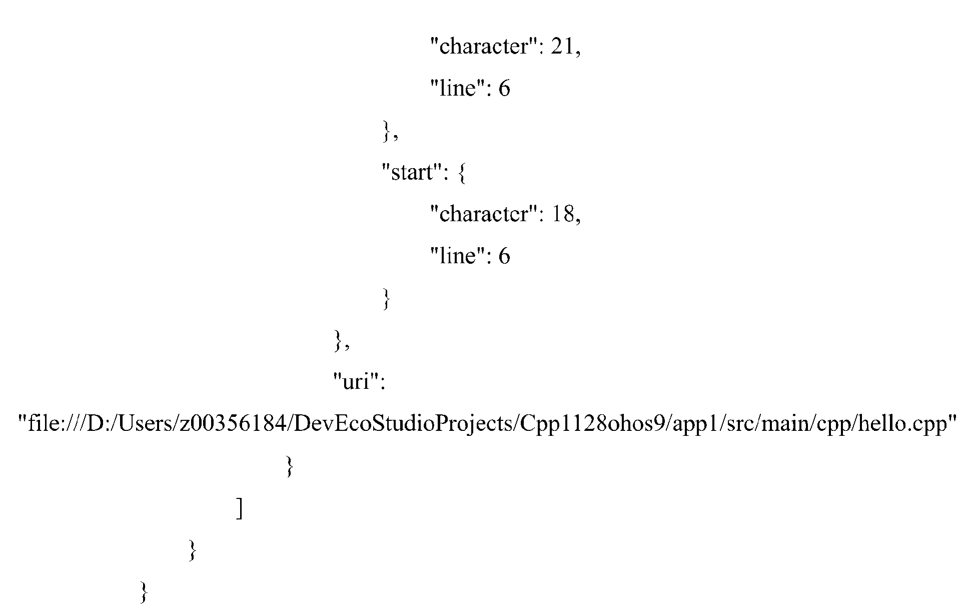

In this way, a client of a programming language and a server of the programming language can support cross-language jumping based on the cross-programming-language jump protocol obtained by extending the LSP, and a problem of strong binding between a cross-programming-language service and a platform can also be resolved, to implement quick migration and adaptation.

S407: The second client plug-in of the first device sends the second location information to the first client plug-in of the first device.

Optionally, S407 may include: The second client plug-in of the first device sends the second location information to the first client plug-in of the first device through a jump interface or a communication protocol (for example, a protocol obtained based on the LSP) between different programming languages.

Optionally, the method provided in this embodiment of this application may further include: An interface displayed on the first device jumps from a first interface to a second interface, where the first interface includes the first function, and the second interface includes the second function.

For example, the interface displayed on the first device jumps from a first interface shown in FIG. 5 to an interface on which the file of the second programming language is displayed. In this way, the DevEco Studio editor supports a view jump function. Compared with a manner in which a user views, in an inefficient manual manner, an underlying implementation corresponding to a function, this manner can improve code reading efficiency, and code can be quickly migrated to another IDE platform subsequently.

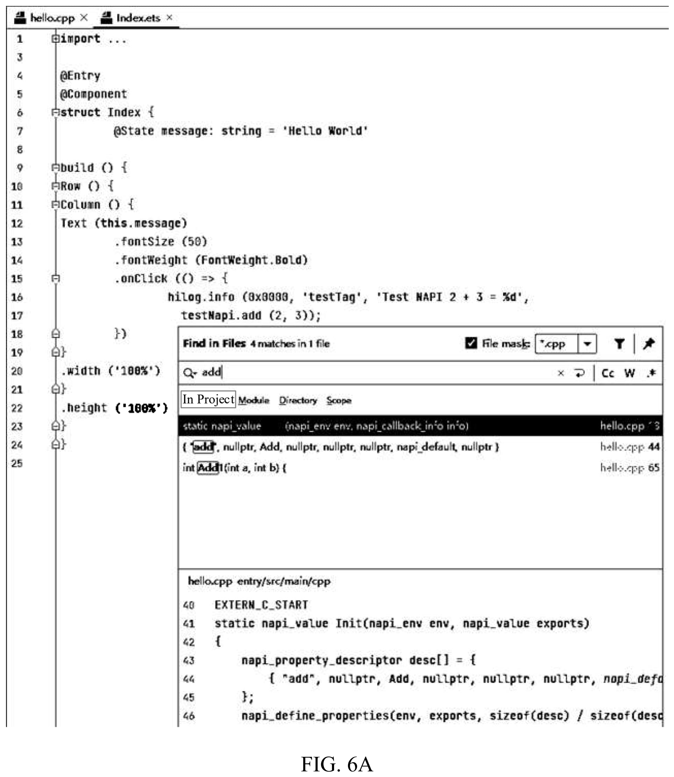

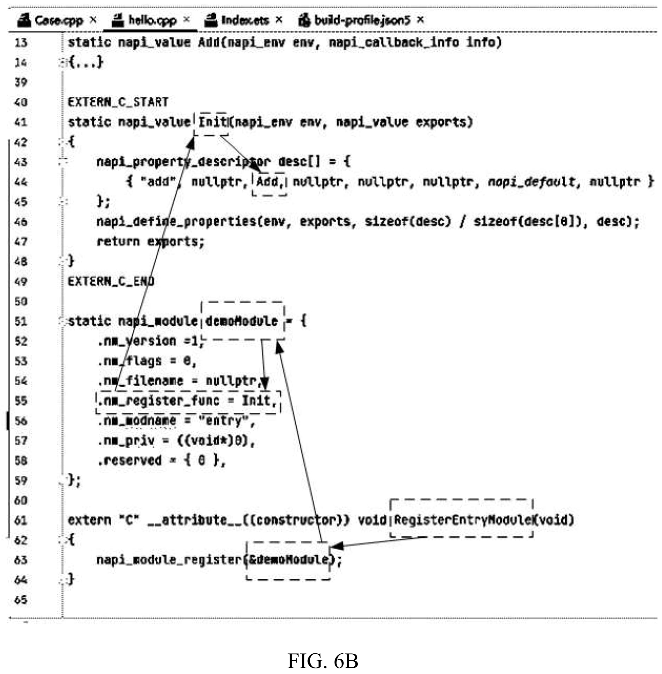

For example, with reference to FIG. 6A and FIG. 6B, how a user views an underlying implementation of an add function in an inefficient manual manner is described. With reference to FIG. 6A, after detecting an operation of clicking, by the user, the testNapi.add() function in the eTS file, the first device jumps to an ets file at a definition, and displays an interface shown in FIG. 6A. Based on code in a line 2, that is, import testNapi from 'libentry.so' (not shown in FIG. 6A, where reference may be made to code in a line 2 in FIG. 5), on an interface shown in FIG. 6A, the user determines that the testNapi.add() function is a cross-language calling function, and then performs searching by a function name add and sets to search only for a .cpp file. A search result is shown in FIG. 6A. Then a C++ file including a mapping relationship between an eTS function and a C++ function is manually preliminarily recognized from the search result (code starting from a line 40 in a pop-up window in FIG. 6A is the search result). For example, the C++ file is "add", nullptr, Add, nullptr, nullptr, nullptr, napi_default, nullptr in the search result in FIG. 6A. The user manually finds a line 44 in the hello.cpp file based on the search result, as shown in FIG. 6B, and manually re-confirms the mapping relationship between the eTS function and the C++ function, for example, manually finds a registration entry RegisterEntryModule. After completing the confirmation according to a sequence shown in FIG. 6B, the user manually jumps to a C++ underlying implementation.

In this application, the first device may automatically jump to the second function in the file of the second programming language after detecting the jump operation performed by the user based on the first function, and the file of the second programming language does not need to be manually searched for the second function, so that code reading efficiency can be improved.

According to the method shown in FIG. 4, cross-language jumping is implemented based on the cross-programming-language jump protocol. This not only resolves a problem of strong binding between a cross-programming-language service and a platform, but also supports cross-language interaction, to implement a universal cross-language service capability and improve quick adaptation of a multi-language and multi-compiler cross-language service.

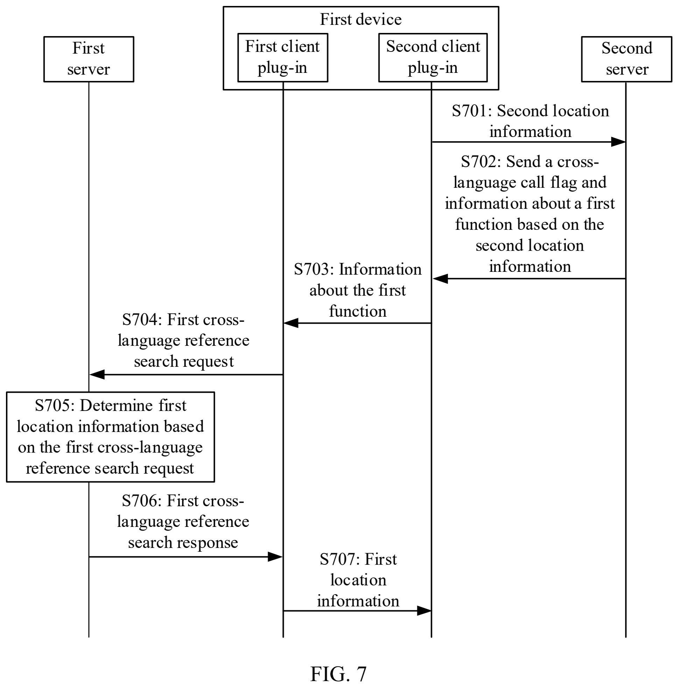

For example, FIG. 7 is a schematic flowchart of another code search method according to an embodiment of this application. The method provided in FIG. 7 is applicable to reference searching between two or more programming languages. The method shown in FIG. 7 is described by using reference searching between two programming languages as an example.

In the method shown in FIG. 7, a process of the method provided in this application is described by using cross-language reference searching between a first programming language and a second programming language as an example. For example, a user wants to view a reference status of a function in a file of another programming language (a file of a programming language other than a file of the second programming language) for a second function in the file of the second programming language.

As shown in FIG. 7, the method includes the following steps.

S701: A second client plug-in of a first device sends second location information to a second server.

For example, the second location information indicates a location of the second function in the file of the second programming language. For example, location information of the second function includes but is not limited to one or more of the following: a package name of the second function, a class name of the second function, a module name of the second function, a line at which the second function is located, and/or the like.

In this application, the package name of the second function is a name of a package to which the second function belongs, the class name of the second function is a name of a class to which the second function belongs, and the module name of the second function is a name of a module to which the second function belongs.

Optionally, S701 includes: After the first device detects a second operation, the second client plug-in of the first device sends the second location information to the second server.

For example, the second operation may be a reference search operation performed by the user based on the second function, for example, an operation performed by the user to search for code that references the second function.

It is assumed that the first programming language is an eTS programming language, and the second programming language is a C++ programming language. The second operation may be a reference search operation performed by the user on the second function in a file of the C++ programming language. For example, the user may perform the reference search operation by using a tool or a shortcut key in a menu.

S702: The second server sends a cross-language call flag and information about a first function to the second client plug-in of the first device based on the second location information.

For example, the information about the first function includes one or more of the following: a function name of the first function, a class name of the first function, a module name of the first function, and a package name of the first function. For different programming languages, the information about the first function may include different content.

Optionally, S702 may include: The second server determines the information about the first function based on a first mapping relationship and the second location information. For an implementation of the first mapping relationship, refer to corresponding descriptions in S405.

Optionally, S702 may include: The second server determines the cross-language call flag based on the first mapping relationship and a function name of the second function.

For example, if the first mapping relationship includes a correspondence between the second function and another function, it is determined that the second function is referenced in a file of another programming language (a file of a programming language other than the file of the second programming language), and the cross-language call flag is sent. If the first mapping relationship does not include a correspondence between the second function and another function, it is determined that the second function is not referenced in a file of another programming language, and, no cross-language call flag is sent.

S703: The second client plug-in of the first device sends the information about the first function to a first client plug-in of the first device.

Optionally, S703 may include: The second client plug-in of the first device sends the information about the first function to the first client plug-in of the first device through a jump interface or a communication protocol (for example, a protocol obtained based on an LSP) between different programming languages. The jump interface is used for interaction between the first client plug-in of the first device and the second client plug-in of the first device. In this way, different client plug-ins can interact with each other through a jump interface or a communication protocol between different programming languages, to support a cross-programming-language service.

S704: The first client plug-in of the first device sends a first cross-language reference search request to a first server.

For example, the first cross-language reference search request is used to request to search for the first function.

For example, the first cross-language reference search request includes a name of the first function and information about a cross-language reference strategy, and may further include one or more of the following: the class name of the first function, the module name of the first function, and the package name of the first function.

For example, the information about the cross-language reference strategy may include an identifier of the cross-language reference strategy, and the cross-language reference strategy includes but is not limited to: referencing the second programming language by the first programming language, referencing a third programming language by the first programming language, and the like, for example, referencing the C++ programming language by the eTS programming language, or referencing a Java programming language by the eTS programming language. The first server may determine a corresponding reference search scheme based on the information about the cross-language reference strategy.

In some embodiments, S704 may include: The first client plug-in of the first device sends the first cross-language reference search request to the first server through a cross-programming-language reference search protocol. A name of the cross-programming-language reference search protocol is not limited in this application.

In this way, a client plug-in of a programming language can communicate with a server of the programming language through a cross-programming-language reference search protocol. The cross-programming-language reference search protocol is obtained by extending the LSP, and can implement a universal cross-language service capability, to resolve a problem of strong binding to a platform.

S705: The first server determines first location information based on the first cross-language reference search request.

For example, the first location information indicates a location of the first function in a file of the first programming language. For example, location information of the first function includes but is not limited to one or more of the following: the package name of the first function, the class name of the first function, the module name of the first function, a line at which the first function is located, and/or the like.

For example, it is assumed that the cross-language reference strategy is referencing the C++ programming language by the eTS programming language, and the first server determines the first location information based on the name of the first function. Optionally, in a process of determining the first location information, the first server may further take the class name of the first function, the module name of the first function, and the package name of the first function into consideration.

S706: The first server sends a first cross-language reference search response to the first client plug-in of the first device.

For example, the first cross-language reference search response includes null or the first location information.

For example, the first server may find no first function and determine no first location information, and therefore returns null.

Optionally, the first cross-language reference searchresponse may alternatively include an error code and error information, and the error information may indicate a cause of error. For example, the first server does not support reference searching from the second programming language to the first programming language and determines no first location information, and therefore returns the error code and the error information.

In some embodiments, S706 may include: The first server sends the first cross-language reference search response to the first client plug-in of the first device through the cross-programming-language reference search protocol.

With reference to S704 and S706, for example, the cross-programming-language reference search protocol includes a request part and a response part. The request part may be expressed as textDocument/crossReferences(CrossLanguageReferencesParams), where CrossLanguageReferencesParams indicates a cross-language reference parameter, and textDocument/crossReferences indicates the name of the cross-programming-language reference search protocol. The response part includes result information, and may further include other information. The result information may be expressed as null | Location[], where null indicates an empty value, | indicates or, and Location[] indicates one or more pieces of first location information. The other information includes the error code and the error information.

Optionally, the cross-language reference parameter in the request part may include one or more of the following: a name field, a strategy field, and an extension field. The following describes the fields in the cross-language reference parameter with reference to Table 3.

For example, the name field indicates the name of the first function.

For example, the strategy field indicates the cross-language reference strategy. For example, the strategy field includes the information about the cross-language reference strategy, for example, the identifier of the cross-language reference strategy.

For example, the extension field may also be referred to as a reserved field. For example, the extension field may be an extension field for the cross-language reference strategy. The extension field may be used to add an independent parameter needed for each cross-language reference strategy. Different parameters may be needed for different cross-language reference strategies, and content included in the extension field may be adjusted based on an actual cross-language reference strategy. Optionally, the class name of the first function, the module name of the first function, and/or the package name of the first function may be carried in the extension field of the cross-programming-language reference search protocol.

**Table 3**

| Parameter | Field | Type | Remarks |
|---|---|---|---|
| Cross-language reference parameter (CrossLanguageReferencesParams) | Name (name) | String (string) | The name field indicates a function name corresponding to a cross-language reference search, for example, the function name of the first function. |
| | Strategy (strategy) | Cross string (CrossStrategy) | The strategy field indicates the cross-language reference strategy. |
| | Extension (extension) | Object (object) | The extension field may be an extension field for a cross-language reference. |

Optionally, a location parameter (Location or Location[]) in the response part may include one or more of the following: a URI field and a range field. The following describes the fields in the location parameter with reference to Table 4.

For example, the URI field indicates a URI of the file, to which the first function (which may also be referred to as a target-language function) belongs, of the first programming language, and may further indicate a storage path of the file of the first programming language in an external memory of a computer.

For example, the range field indicates a range of a function name of the first function.

**Table 4**

| Parameter | Field | Type | Remarks |
|---|---|---|---|
| Location (Location) | Uniform resource identifier (URI) | File URI (DocumentUri) | A URI of a file, to which the target-language function belongs, of a programming language |
| | Range (Range) | Range (Range) | A range of a name of the target-language function |

For example, the cross-programming-language reference search protocol is expressed as textDocument/crossReferences. With reference to the description of the cross-programming-language reference search protocol in Table 3 and Table 4, the cross-programming-language reference search protocol obtained based on the LSP may be shown as follows:

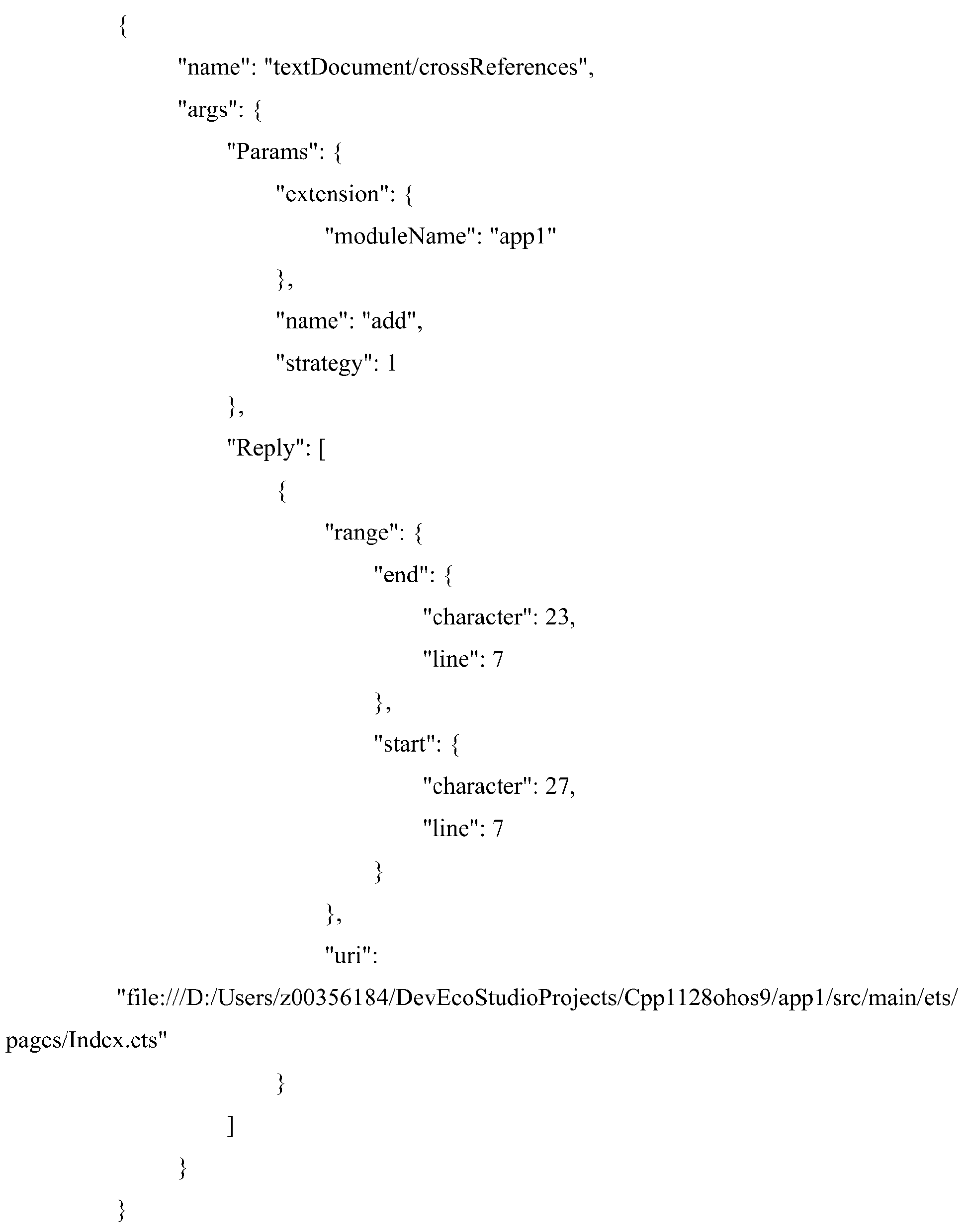

In this way, a client of a programming language and a server of the programming language can support cross-language reference searching based on the cross-programming-language reference search protocol obtained by extending the LSP, and a problem of strong binding between a cross-programming-language service and a platform can also be resolved, to implement quick migration and adaptation.

S707: The first client plug-in of the first device sends the first location information to the second client plug-in of the first device.

Optionally, S407 may include: The first client plug-in of the first device sends the first location information to the second client plug-in of the first device through a jump interface or a communication protocol (for example, a protocol obtained based on the LSP) between different programming languages.

Optionally, the method provided in this embodiment of this application may further include: The first device searches for the first function based on the first location information, and displays a reference search result.

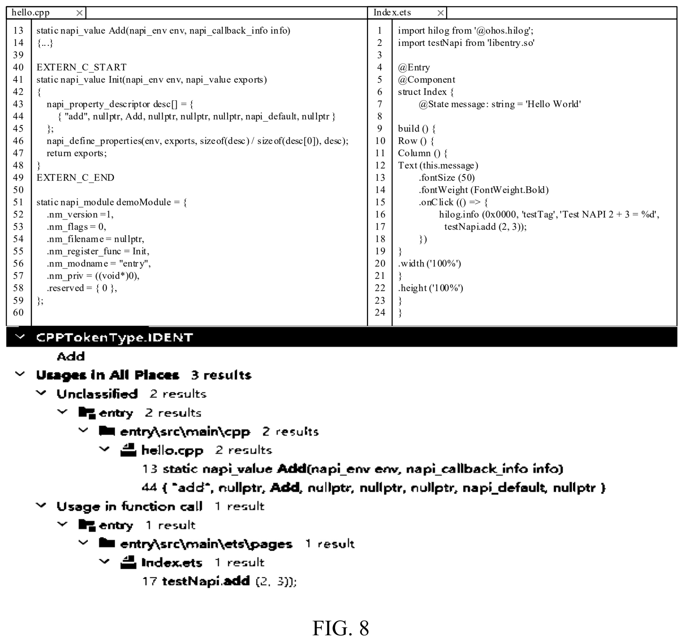

With reference to FIG. 8, after detecting that the user searches a hello.cpp file for an Add function, the first device performs the method shown in FIG. 7, and displays an interface shown in FIG. 8. The interface includes: The Index.ets file includes a reference search result for the Add function. Specifically, a function that is in the Index.ets file and that references the Add function is a testNapi.add(2, 3) function in a line 17.

Optionally, after the first device detects that the user searches the hello.cpp file for the Add function, the first device may further search for a reference status of the Add function in the hello.cpp file. Specifically, as shown in FIG. 8, the hello.cpp file includes two reference search results for the Add function, which are respectively in a line 13 and a line 44 in the hello.cpp file.

According to the method shown in FIG. 7, cross-language reference searching for a function is implemented based on the cross-programming-language reference search protocol. This not only resolves a problem of strong binding between a cross-programming-language service and a platform, but also supports cross-language interaction, to implement a universal cross-language service capability and improve quick adaptation of a multi-language and multi-compiler cross-language service.

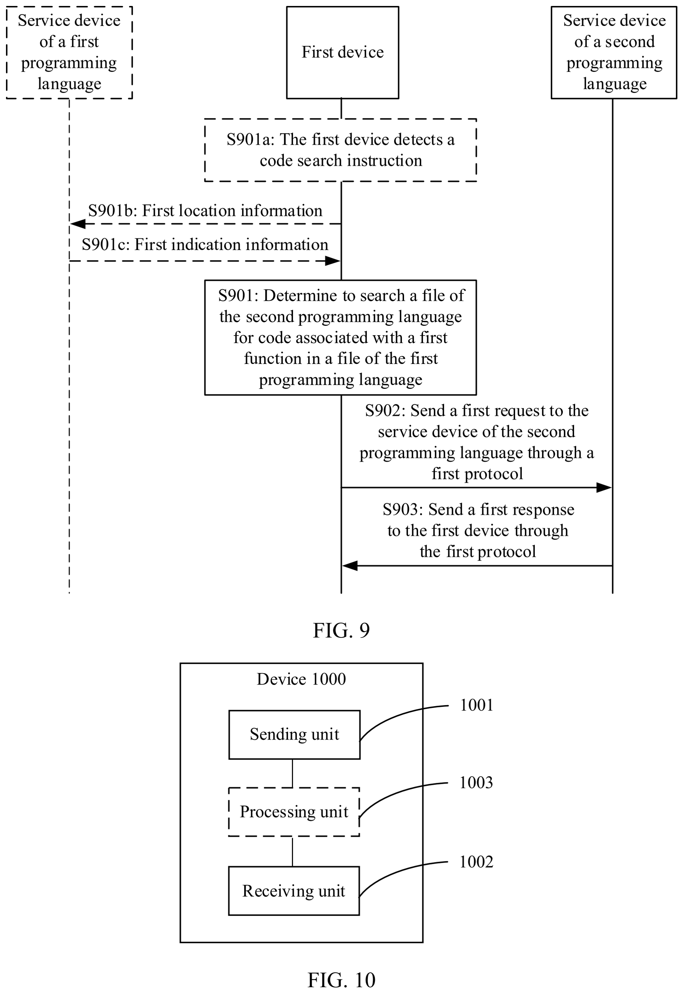

For example, FIG. 9 is a schematic flowchart of still another code search method according to an embodiment of this application. The method provided in FIG. 9 is applicable to reference searching between two or more programming languages. The method shown in FIG. 9 is described by using reference searching between two programming languages as an example. In FIG. 9, in a cross-language scenario, a general-purpose cross-language service method based on an LSP extension unifies data formats of cross-language requests and responses, and provides a general-purpose solution for an IDE developer to quickly adapt to cross-language code jumping and reference search features on different platforms.

As shown in FIG. 9, the method includes the following steps.

S901: A first device determines to search a file of a second programming language for code associated with a first function in a file of a first programming language.

For example, the file of the second programming language and the file of the first programming language are files of different programming languages.

In some embodiments, S901 may include: determining to search the file of the second programming language for a function called by the first function.

In some other embodiments, S901 may include: determining to search the file of the second programming language for a function that references the first function.

In a possible design scheme, S901 may include S901a to S901c.

S901a: The first device detects a code search instruction.

Optionally, the code search instruction instructs to search for the code associated with the first function.

Optionally, the code search instruction may be the first operation in S401 or the second operation in S701.

S901b: The first device sends first location information to a service device of the first programming language.

Optionally, the first location information indicates a location of the first function in the file of the first programming language.

Optionally, the first location information may be the first location information in the method shown in FIG. 4 or the second location information in the method shown in FIG. 7.

Optionally, for a specific implementation of S901b, refer to corresponding descriptions in S401 or S701.

S901c: The first device receives first indication information from the service device of the first programming language.

Optionally, the first indication information indicates to search the file of the second programming language for the code associated with the first function in the file of the first programming language.

Optionally, the first device may further receive, from the service device of the first programming language, information about a function referenced by the first function. For example, the information about the function referenced by the first function includes one or more of the following: a function name of the function referenced by the first function, a class name of the function referenced by the first function, a module name of the function referenced by the first function, and a package name of the function referenced by the first function. For different programming languages, the information about the function referenced by the first function may include different content.

Optionally, the first indication information may be a cross-language call flag in the method shown in FIG. 4 or FIG. 7.

Optionally, for a specific implementation of S901c, refer to corresponding descriptions in S402 or S702.

In some embodiments, the first device includes a first-programming-language client plug-in and a second-programming-language client plug-in. That the first device detects a code search instruction may include: The first-programming-language client plug-in of the first device detects the code search instruction.

Optionally, the method shown in FIG. 8 may further include: The first-programming-language client plug-in of the first device sends a name of the first function to the second-programming-language client plug-in of the first device. For a specific implementation, refer to corresponding descriptions in S403 or S703.

S902: The first device sends a first request to a service device of the second programming language through a first protocol. Correspondingly, the service device of the second programming language receives the first request from the first device through the first protocol.

For example, the first protocol is related to a language server protocol LSP. The first request includes the name of the first function and search information. The search information includes: searching the file of the second programming language for code associated with code in the file of the first programming language.

Optionally, the search information may be the foregoing information about the cross-language jump strategy or the foregoing information about the cross-language reference strategy.

In some embodiments, the first protocol includes a name field, a search field, and a location field. The name field carries the name of the first function, the search field carries the search information, and the location field carries first information. For a specific implementation of the first protocol, refer to the specific implementation of the cross-programming-language jump protocol or the cross-programming-language reference search protocol. Details are not described herein again.

Optionally, the search field may be the foregoing strategy field. For an implementation of the location field, refer to the descriptions of the location parameter in the method shown in FIG. 4 or FIG. 7. Details are not described herein again.

In some embodiments, the searching the file of the second programming language for code associated with code in the file of the first programming language is searching the file of the second programming language for the function called by the first function, or the searching the file of the second programming language for code associated with code in the file of the first programming language is searching the file of the second programming language for the function that references the first function.

Optionally, for a specific implementation of S902, refer to corresponding descriptions in S404 or S704.

S903: The service device of the second programming language sends a first response to the first device through the first protocol. Correspondingly, the first device receives the first response from the service device of the second programming language through the first protocol.

For example, the first response includes the first information, and the first information indicates a location of the code associated with the first function.

Optionally, the first response may be referred to as a first cross-language jump response or a first cross-language reference search response. For a specific implementation, refer to the descriptions of the location parameter in the method shown in FIG. 4 or FIG. 7. Details are not described herein again.

In some embodiments, the first information includes a location of a second function, and the second function is a function that is in the file of the second programming language and that is called by the first function.

In some other embodiments, the first information includes a location of a third function, and the third function is a function that is in the file of the second programming language and that references the first function.

In some embodiments, the first information is determined based on the name of the first function, the search information, and a first mapping relationship, and the first mapping relationship includes a mapping relationship between at least one function in the file of the first programming language and at least one function in the file of the second programming language. For a specific implementation, refer to corresponding descriptions in S405 or S705. Details are not described herein again.

For a specific implementation of S903, refer to corresponding descriptions in S406 or S706. Details are not described herein again.

According to the method provided in FIG. 9, the first device interacts with the service device of the second programming language through the first protocol, sends the name of the first function and the search information to the service device of the second programming language, and receives the first information. The search information includes: searching the file of the second programming language for the code associated with the code in the file of the first programming language. The first information indicates the location of the code associated with the first function. In this way, a cross-programming-language service can be implemented, to improve code reading efficiency.

In this application, for same or similar parts in embodiments, mutual reference may be made between the embodiments, unless otherwise specified. In embodiments of this application and implementations/methods/implementation methods of embodiments, unless otherwise specified or a logical conflict occurs, terms and/or descriptions in different embodiments and implementations/methods/implementation methods of embodiments are consistent and may be mutually referenced. Technical features in different embodiments and implementations/methods/implementation methods of embodiments may be combined to form a new embodiment, implementation, method, or implementation method based on an internal logical relationship between the technical features. Any content in the examples or the optional manners described in the foregoing embodiments may be combined in any manner, and combined content also falls within the scope of this application. The foregoing implementations of this application do not constitute a limitation on the protection scope of this application.

The foregoing describes in detail the input method provided in embodiments of this application with reference to FIG. 4 to FIG. 9. The following describes in detail a first device and a second device provided in embodiments of this application with reference to FIG. 10.

FIG. 10 is a diagram of a structure of a device according to an embodiment of this application. For example, the device may be a first device or a second device. As shown in FIG. 10, the device 1000 may include a sending unit 1001 and a receiving unit 1002, and may further include a processing unit 1003, a display unit (not shown in FIG. 10), and/or a communication unit (not shown in FIG. 10).

In a possible design, the device 1000 is the first device, and the device 1000 may be configured to implement the functions of the first device in the foregoing method embodiments.

Optionally, the sending unit 1001 is configured to support the first device in performing any sending function in FIG. 4 to FIG. 9.

Optionally, the receiving unit 1002 is configured to support the first device in performing any receiving function in FIG. 4 to FIG. 9.

Optionally, the processing unit 1003 is configured to support the first device in performing any processing function in FIG. 4 to FIG. 9.

Optionally, the display unit is configured to support the first device in performing any display function and/or touch function in FIG. 4 to FIG. 9.

Optionally, the communication unit is configured to support the first device in performing any communication function in FIG. 4 to FIG. 9, for example, accessing a local area network through a routing device.

The receiving unit 1002 and the sending unit 1001 may be implemented by a transceiver or a transceiver-related circuit component, and may be a transceiver or a transceiver unit. Operations and/or functions of the units in the device 1000 are respectively intended to implement corresponding processes of the method in the foregoing method embodiments. All related content of the steps in the foregoing method embodiments may be cited in function descriptions of corresponding functional units. For brevity, details are not described herein again.

Optionally, the device 1000 shown in FIG. 10 may further include a storage unit (not shown in FIG. 10), and the storage unit stores a program or instructions. When the sending unit 1001, the receiving unit 1002, the processing unit 1003, and the display unit execute the program or the instructions, the device 1000 shown in FIG. 10 is enabled to perform the method in the foregoing method embodiments.

For technical effect of the device 1000 shown in FIG. 10, refer to the technical effect of the method in the foregoing method embodiments. Details are not described herein again.

In addition to the form of the device 1000, the technical solutions provided in this application may alternatively be a functional unit or a chip in the first device, or an apparatus used in cooperation with the first device.

In another possible design, the device 1000 is a first server, and the device 1000 may be configured to implement the functions of the first server in the foregoing method embodiments.

Optionally, the sending unit 1001 is configured to support the first server in performing any sending function in FIG. 4 to FIG. 9.

Optionally, the receiving unit 1002 is configured to support the first server in performing any receiving function in FIG. 4 to FIG. 9.

Optionally, the processing unit 1003 is configured to support the first server in performing any processing function in FIG. 4 to FIG. 9.

Optionally, the display unit is configured to support the first server in performing any display function and/or touch function in FIG. 4 to FIG. 9.

Optionally, the communication unit is configured to support the first server in performing any communication function in FIG. 4 to FIG. 9, for example, accessing a local area network through a routing device.

The receiving unit 1002 and the sending unit 1001 may be implemented by a transceiver or a transceiver-related circuit component, and may be a transceiver or a transceiver unit. Operations and/or functions of the units in the device 1000 are respectively intended to implement corresponding processes of the method in the foregoing method embodiments. All related content of the steps in the foregoing method embodiments may be cited in function descriptions of corresponding functional units. For brevity, details are not described herein again.

Optionally, the device 1000 shown in FIG. 10 may further include a storage unit (not shown in FIG. 10), and the storage unit stores a program or instructions. When the sending unit 1001, the receiving unit 1002, the processing unit 1003, and the display unit execute the program or the instructions, the device 1000 shown in FIG. 10 is enabled to perform the method in the foregoing method embodiments.

For technical effect of the device 1000 shown in FIG. 10, refer to the technical effect of the method in the foregoing method embodiments. Details are not described herein again.

In addition to the form of the device 1000, the technical solutions provided in this application may alternatively be a functional unit or a chip in the first server, or an apparatus used in cooperation with the first server.

In still another possible design, the device 1000 is a second server, and the device 1000 may be configured to implement the functions of the second server in the foregoing method embodiments.

Optionally, the sending unit 1001 is configured to support the second server in performing any sending function in FIG. 4 to FIG. 9.

Optionally, the receiving unit 1002 is configured to support the second server in performing any receiving function in FIG. 4 to FIG. 9.

Optionally, the processing unit 1003 is configured to support the second server in performing any processing function in FIG. 4 to FIG. 9.

Optionally, the display unit is configured to support the second server in performing any display function and/or touch function in FIG. 4 to FIG. 9.

Optionally, the communication unit is configured to support the second server in performing any communication function in FIG. 4 to FIG. 9, for example, accessing a local area network through a routing device.

The receiving unit 1002 and the sending unit 1001 may be implemented by a transceiver or a transceiver-related circuit component, and may be a transceiver or a transceiver unit. Operations and/or functions of the units in the device 1000 are respectively intended to implement corresponding processes of the method in the foregoing method embodiments. All related content of the steps in the foregoing method embodiments may be cited in function descriptions of corresponding functional units. For brevity, details are not described herein again.

Optionally, the device 1000 shown in FIG. 10 may further include a storage unit (not shown in FIG. 10), and the storage unit stores a program or instructions. When the sending unit 1001, the receiving unit 1002, the processing unit 1003, and the display unit execute the program or the instructions, the device 1000 shown in FIG. 10 is enabled to perform the method in the foregoing method embodiments.

For technical effect of the device 1000 shown in FIG. 10, refer to the technical effect of the method in the foregoing method embodiments. Details are not described herein again.

In addition to the form of the device 1000, the technical solutions provided in this application may alternatively be a functional unit or a chip in the second server, or an apparatus used in cooperation with the second server.

An embodiment of this application further provides a communication system, including a first device and at least two second devices.

Optionally, the devices in the communication system provided in this embodiment of this application may perform the method in the foregoing method embodiments. For technical effect of the communication system, refer to the technical effect of the method in the foregoing method embodiments. Details are not described herein again.

An embodiment of this application further provides a chip system, including a processor. The processor is coupled to a memory. The memory is configured to store a program or instructions. When the program or the instructions are executed by the processor, the chip system is enabled to implement the method in any one of the foregoing method embodiments.

Optionally, the chip system may include one or more processors. The processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory.

Optionally, the chip system may also include one or more memories. The memory may be integrated with the processor, or may be disposed separately from the processor. This is not limited in this embodiment of this application. For example, the memory may be a non-transitory processor, for example, a read-only memory ROM. The memory and the processor may be integrated into one chip, or may be separately disposed on different chips. A type of the memory and a manner of disposing the memory and the processor are not specifically limited in this embodiment of this application.

For example, the chip system may be a field programmable gate array (field programmable gate array, FPGA), an application-specific integrated circuit (Application-specific integrated circuit, ASIC), a system-on-a-chip (system-on-a-chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip.

It should be understood that the steps in the foregoing method embodiments may be performed by an integrated logic circuit of hardware in a processor or by instructions in a form of software. The steps of the method disclosed with reference to embodiments of this application may be directly performed by a hardware processor, or may be performed by a combination of hardware in a processor and a software module.

An embodiment of this application further provides a readable storage medium. The readable storage medium stores a program. When the program is run on a computer or a device, the computer or the device is enabled to perform the foregoing related steps, to implement the method in the foregoing embodiments.

An embodiment of this application further provides a program product. When the program product is run on a computer or a device, the computer or the device is enabled to perform the foregoing related steps, to implement the method in the foregoing embodiments.

In addition, an embodiment of this application further provides an apparatus. The apparatus may be specifically a component or a module, and the apparatus may include one or more processors and a memory that are connected to each other. The memory is configured to store a program. When the program is executed by the one or more processors, the apparatus is enabled to perform the method in the foregoing method embodiments.

The apparatus, the readable storage medium, the program product, or the chip provided in embodiments of this application is configured to perform a corresponding method provided above. Therefore, for beneficial effect that can be achieved, refer to the beneficial effect of the corresponding method provided above. Details are not described herein again.

Methods or algorithm steps described with reference to content disclosed in embodiments of this application may be implemented by hardware, or may be implemented by a processor executing software instructions. The software instructions may include corresponding software modules. The software modules may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an application-specific integrated circuit (Application-specific integrated circuit, ASIC).

Based on the descriptions of the foregoing implementations, a person skilled in the art may clearly understand that, for a purpose of convenient and brief description, division into the foregoing functional modules is merely used as an example for illustration. During actual application, the foregoing functions may be allocated to different functional modules and implemented according to a requirement. In other words, an inner structure of the apparatus is divided into different functional modules to implement all or some of the functions described above. For a detailed operating process of the foregoing system, apparatus, and unit, refer to a corresponding process in the foregoing method embodiments. Details are not described herein again.

In the several embodiments provided in this application, it should be understood that the disclosed method may be implemented in other manners. The described apparatus embodiments are merely examples. For example, division into the modules or units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the modules or units may be implemented in electrical, mechanical, or other forms.

In addition, functional units in embodiments of this application may be integrated into one processing unit, or each unit may exist alone physically, or two or more units may be integrated into one unit. The integrated unit may be implemented in a form of hardware, or may be implemented in a form of a software functional unit.

The readable storage medium includes but is not limited to any one of the following: any medium that can store program code, for example, a USB flash drive, a removable hard disk drive, a read-only memory (read-only memory, ROM), a random access memory (random access memory, RAM), a magnetic disk, or a compact disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A code search method, comprising:
determining, by a first device, to search a file of a second programming language for code associated with a first function in a file of a first programming language, wherein the file of the second programming language and the file of the first programming language are files of different programming languages;
sending, by the first device, a first request to a service device of the second programming language through a first protocol, wherein the first protocol is related to a language server protocol, LSP, the first request comprises a name of the first function and search information, and the search information comprises: searching the file of the second programming language for code associated with code in the file of the first programming language; and
receiving, by the first device, a first response from the service device of the second programming language through the first protocol, wherein the first response comprises first information, and the first information indicates a location of the code associated with the first function.

2. The method according to claim 1, wherein the first protocol comprises a name field, a search field, and a location field, the name field carries the name of the first function, the search field carries the search information, and the location field carries the first information.

3. The method according to claim 1 or 2, wherein the determining to search a file of a second programming language for code associated with a first function in a file of a first programming language comprises: determining to search the file of the second programming language for a function called by the first function, wherein
the first information comprises a location of a second function, and the second function is a function that is in the file of the second programming language and that is called by the first function.

4. The method according to claim 1 or 2, wherein the determining to search a file of a second programming language for code associated with a first function in a file of a first programming language comprises: determining to search the file of the second programming language for a function that references the first function, wherein
the first information comprises a location of a third function, and the third function is a function that is in the file of the second programming language and that references the first function.

5. The method according to any one of claims 1 to 4, wherein the first information is determined based on the name of the first function, the search information, and a first mapping relationship, and the first mapping relationship comprises a mapping relationship between at least one function in the file of the first programming language and at least one function in the file of the second programming language.

6. The method according to any one of claims 1 to 5, wherein the determining, by a first device, to search a file of a second programming language for code associated with a first function in a file of a first programming language comprises:
detecting, by the first device, a code search instruction, wherein the code search instruction instructs to search for the code associated with the first function;
sending, by the first device, first location information to a service device of the first programming language, wherein the first location information indicates a location of the first function in the file of the first programming language; and
receiving, by the first device, first indication information from the service device of the first programming language, wherein the first indication information indicates to search the file of the second programming language for the code associated with the first function in the file of the first programming language.

7. The method according to any one of claims 1 to 6, wherein the first device comprises a first-programming-language client plug-in and a second-programming-language client plug-in, and the detecting, by the first device, a code search instruction comprises:
detecting, by the first-programming-language client plug-in of the first device, the code search instruction; and
before the sending, by the first device, a first request to a service device of the second programming language through a first protocol, the method further comprises:
sending, by the first-programming-language client plug-in of the first device, the name of the first function to the second-programming-language client plug-in of the first device.

8. A code search method, comprising:
receiving, by a service device of a second programming language, a first request from a first device through a first protocol, wherein the first protocol is related to a language server protocol LSP, the first request comprises a name of a first function and search information, and the search information comprises: searching a file of the second programming language for code associated with code in a file of a first programming language; and
sending, by the service device of the second programming language, a first response to the first device through the first protocol, wherein the first response comprises first information, and the first information indicates a location of code associated with the first function.

9. The method according to claim 8, wherein the first protocol comprises a name field, a search field, and a location field, the name field carries the name of the first function, the search field carries the search information, and the location field carries the first information.

10. The method according to claim 8 or 9, wherein the searching a file of the second programming language for code associated with code in a file of a first programming language is searching the file of the second programming language for a function called by the first function, the first information comprises a location of a second function, and the second function is a function that is in the file of the second programming language and that is called by the first function.

11. The method according to claim 8 or 9, wherein the searching a file of the second programming language for code associated with code in a file of a first programming language is searching the file of the second programming language for a function that references the first function, the first information comprises a location of a third function, and the third function is a function that is in the file of the second programming language and that references the first function.

12. The method according to any one of claims 8 to 11, wherein the first information is determined based on the name of the first function, the search information, and a first mapping relationship, and the first mapping relationship comprises a mapping relationship between at least one function in the file of the first programming language and at least one function in the file of the second programming language.

13. A first device, wherein the first device comprises:
one or more processors; and
one or more memories, wherein
the memory stores one or more programs, and when the one or more programs is/are executed by the one or more processors, the first device is enabled to perform the method according to any one of claims 1 to 7.

14. A second device, wherein the second device comprises:
one or more processors; and
one or more memories, wherein
the memory stores one or more programs, and when the one or more programs is/are executed by the one or more processors, the second device is enabled to perform the method according to any one of claims 8 to 12.

15. A communication system, wherein the communication system comprises:
the first device according to claim 13; and
the second device according to claim 14.

16. The communication system according to claim 15, wherein the communication system further comprises a service device of a first programming language, and the service device of the first programming language is configured to receive first location information from the first device, wherein the first location information indicates a location of a first function in a file of the first programming language; and
the service device of the first programming language is further configured to send first indication information to the first device, wherein the first indication information indicates to search a file of a second programming language for code associated with the first function in the file of the first programming language.

17. A readable storage medium, wherein the readable storage medium comprises a program, and when the program is run on a device, the device is enabled to perform the method according to any one of claims 1 to 12.
